(19) Europäisches Patentamt
European Patent Office
Office européen des brevets

(11) **EP 4 116 333 A1**

(12) **EUROPEAN PATENT APPLICATION**

(43) Date of publication:
**11.01.2023  Bulletin 2023/02**

(21) Application number: **21382618.3**

(22) Date of filing: **08.07.2021**

(51) International Patent Classification (IPC):
**C08B 3/10** (2006.01)     **C08L 1/10** (2006.01)
**C08B 3/14** (2006.01)

(52) Cooperative Patent Classification (CPC):
**C08B 3/14; C08L 1/10**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Consejo Superior de Investigaciones
Científicas
(CSIC)
41013 Sevilla (ES)**

(72) Inventors:
• **HEREDIA GUERRERO, José Alejandro
29750 Algarrobo (Málaga) (ES)**

• **GUZMÁN PUYOL, Susana
29750 Algarrobo (Málaga) (ES)**
• **BENÍTEZ JIMÉNEZ, José Jesús
41092 Sevilla (ES)**
• **TEDESCHI, Giacomo
16163 Genova (IT)**
• **ATHANASIOU, Athanasia
16163 Genova (IT)**
• **CAVALLO, Gabriella
20133 Milano (IT)**
• **METRANGOLO, Pierangelo
20133 Milano (IT)**

(74) Representative: **Pons
Glorieta Rubén Darío 4
28010 Madrid (ES)**

(54) **METHOD FOR PREPARING CELLULOSE-BRANCHED FLUORINATED ACID ESTERS**

(57)  The present invention relates to a method for preparing cellulose-branched fluorinated acid esters (C-BRFA) by reaction of cellulose with a multibranched fluorinated carboxylic acid in presence of a mixed anhydride system trifluoroacetic acid/trifluoroacetic acid anhydride and cellulose-branched fluorinated acid esters obtained therewith, which can be useful for the preparation of waterproof-breathable films, coatings in textiles and food packaging.

**EP 4 116 333 A1**

**Description**

The present invention relates to a method for preparing cellulose-branched fluorinated acid esters (C-BRFA) by reaction of cellulose with a multibranched fluorinated carboxylic acid in presence of a mixed anhydride system trifluoroacetic acid/trifluoroacetic acid anhydride and cellulose-branched fluorinated acid esters obtained therewith, which can be useful for the preparation of waterproof-breathable films, coatings in textiles and food packaging.

**BACKGROUND ART**

Fluorine-containing polymers, usually termed as fluoropolymers, are versatile high-performance materials made up of partially or fully fluorinated (viz., perfluorinated) monomers. Fluoropolymers show many valuable properties, including chemical inertness, high dielectric constant, flame retardancy, low friction, non-stick behavior, exceptional weatherability, and excellent barrier properties. All these properties make fluoropolymers useful for a wide range of applications such as textiles, automotive and aircraft components, flame-retardants, cookware and cable coatings, linings of piping and chemical tanks, packing for batteries, biomedical devices, etc.

However, despite their outstanding properties, the use of fluoropolymers with C8 or longer linear perfluorinated side chains, typically used in industry, is becoming restricted as recommended by different agencies and public bodies. In fact, such polymers can degrade in the environment producing persistent organic pollutants such us perfluorooctanoic acid (PFOA) of perfluorooctane sulfonate (PFOS), both of great concern for their bio-accumulative and probably carcinogenic potentials.

As an alternative, fluoropolymers with C6 or shorter linear fluorinated side chains, although with lower performances in terms of wettability, are being currently used, since they decompose into more environmentally friendly perfluorohexanoic acid (PFHA) that shows high rates of bio-elimination. For instance, fluoropolymers with C6 side chains have been successfully applied to textiles and coatings for metals as well as for rubber tires demolding process and to produce fibers that are able to encapsulate water and oils, just to mention a few examples.

**SUMMARY OF THE INVENTION**

Recently, to exploit the inherent inertness and omniphobicity of fluorocompounds, increasing their biodegradability and applicability at industrial scale (for instance, for the fabrication of superhydrophobic papers, textiles, and membranes), cellulose esters have been investigated where fluorinated side chains (e.g., 1H,1H,2H,2H-heptadecafluorodecyl, 2H,2H,3H,3H-pefluorononanoyl, pentafluorobenzoyl, and 1H,1H,2H,2H-perfluorooctyltriethoxysilane substituents) are grafted to cellulose. Cellulose is the most common biopolymer in nature, easily accessible, and has a large presence of hydroxyl groups that can be functionalized by a vast number of chemical reactions. In general, cellulose-based materials are considered biodegradable and economic, combining functionality with structural performances. The introduction of fluorinated side chains on cellulose allows to obtain omniphobic materials with excellent microbial resistance. However, the presence of fluorinated chains longer than C6 raises again some environmental concerns. Therefore, the key challenge is to elaborate omniphobic cellulose-based materials by using fluorinated chains shorter than C6. In this sense, the use of new short-chain branched fluorinated substances as a valuable substitute for long-chain linear perfluoroalkyl molecules for more sustainable fabrication is a smart strategy. This peculiar structure affords a high fluorine content while the presence of four ether bonds in the core is expected to hasten the molecule's degradation in the environment thanks to the cleavage of such bonds in physiological conditions, thus overcoming bioaccumulation issues.

The objective of the invention is, therefore, to exploit the inherent properties of biocompatible, biodegradable multi-branched fluorocompounds, increasing their biodegradability and applicability at large scale, by their grafting to cellulose to obtain the corresponding multi-branched fluorinated cellulose esters.

The first aspect of the present invention relates to a novel method for preparing cellulose-branched fluorinated acid esters (C-BRFA) by reaction of cellulose with a multibranched fluorinated carboxylic acid in presence of a mixed anhydride system trifluoroacetic acid/trifluoroacetic acid anhydride.

In a preferred embodiment the method comprises the following steps:

a) solving BRFA crystals with microcrystalline cellulose (C) in proportions C:BRFA ranging from molar ratio 10:0 to 1:1 in a mixture of TFA:TFAA:CHCl$_3$ in a molar ratio of X:1:Y wherein X ranges from 1 to 2, and Y ranges from 0 to 2;
b) cooling at temperature from 20 to 30 °C;
c) precipitation of the polymer with cold ethanol and washing with ethanol for one to four times;
d) drying at room temperature for 24 h under vacuum and re-dissolving the polymer in a mixture of TFA:TFAA:CHCl$_3$ in a molar ratio of X:1:Y wherein X ranges from 1 to 2, and Y ranges from 0 to 2;
e) solvent evaporation for 12h to 3 days;
f) washing the obtained C-BRFA films from step (h) with water, methanol, or a mixture water:methanol for one to four times;
g) drying at room temperature for 24 h under vacuum.

In a particularly preferred embodiment, the C-BRFA proportions in step (a) are selected from 1:0, 10:1, 5:1 and 1:1.

In another preferred embodiment, the mixture TFA:TFAA:CHCl$_3$ in steps (a) and/or d) is in a molar ratio of 2:1:1.

In another preferred embodiment, the precipitate in step (c) is washed with ethanol three times.

In another preferred embodiment, the solvent evaporation in step e) takes 2 days.

In another preferred embodiment, the washing solution in step f) is water:methanol.

In a second aspect, the invention refers to cellulose-branched fluorinated acid esters obtained by the method of the invention as previously described.

In a preferred embodiment, the C-BRFA proportions are 1:0, 10:1, 5:1 and 1:1.

In a third aspect, the invention relates to the use the cellulose-branched fluorinated acid esters as described above for the preparation of waterproof-breathable films, coatings in textiles and/or food packaging.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

## DESCRIPTION OF THE DRAWINGS

**Fig 1. A)** Acylation of cellulose with BRFA *via* a trifluoroacetic acid/trifluroacetic anhydride (TFA/TFAA) mixed anhydride system.

**Fig 2**. $^1$H NMR spectra of pure BRFA, C-BRFA 1:0, C-BRFA 10:1, C-BRFA 5:1, and C-BRFA 299 1:1.

**Fig 3. A)** ATR-FTIR spectra of the different C-BRFA samples and the BRFA acid; B) Shift of the OH stretching mode with the mole fraction of BRFA; C) Variation of the energy of the H-bonds (EH) with the mole fraction of BRFA; D) DSC thermograms of C-BRFA 1:1, C-BRFA 5:1, C-BRFA 10:1, and BRFA.

**Fig 4. A)** Opacity measurements of the different C-BRFA samples; **B)** top-view SEM images of C-BRFA 1:1, C-BRFA 5:1, and C-BRFA 10:1 samples. Scale bar = 10 $\mu$m.

**Fig 5. A)** Typical tensile stress-strain curves C-BRFA 1:0, C-BRFA 10:1, C-BRFA 5:1, and C-427 BRFA 1:1 films; **B)** Mechanical parameters (i.e., Young's modulus, stress and elongation at break) calculated from the stress-strain curves of the C-BRFA samples as a function of the mole fraction of BRFA. The inset shows a photograph of C-BRFA 1:1 during the tensile test.

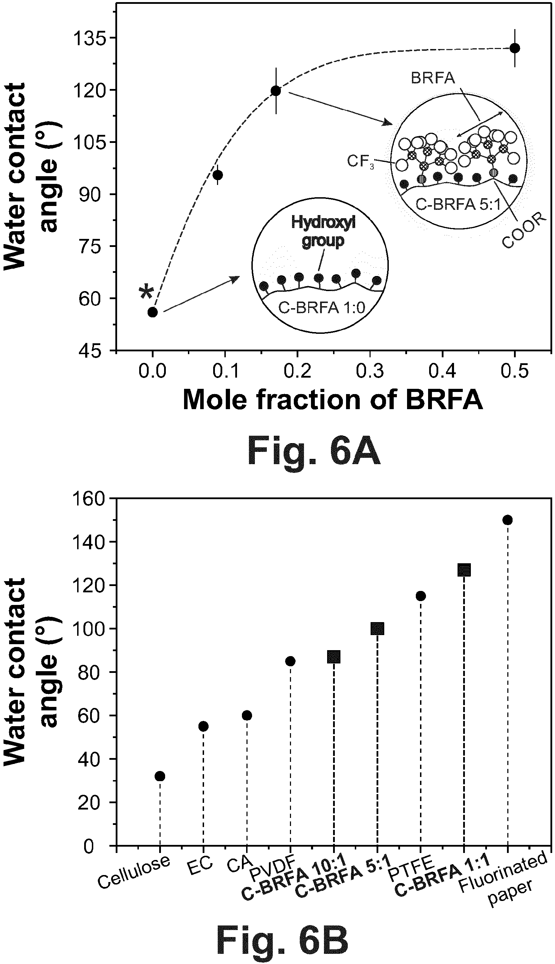

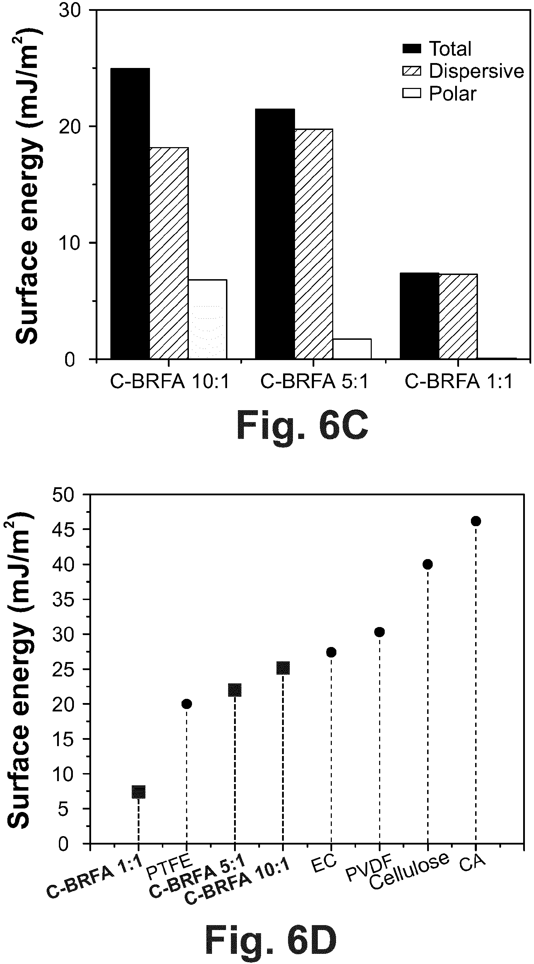

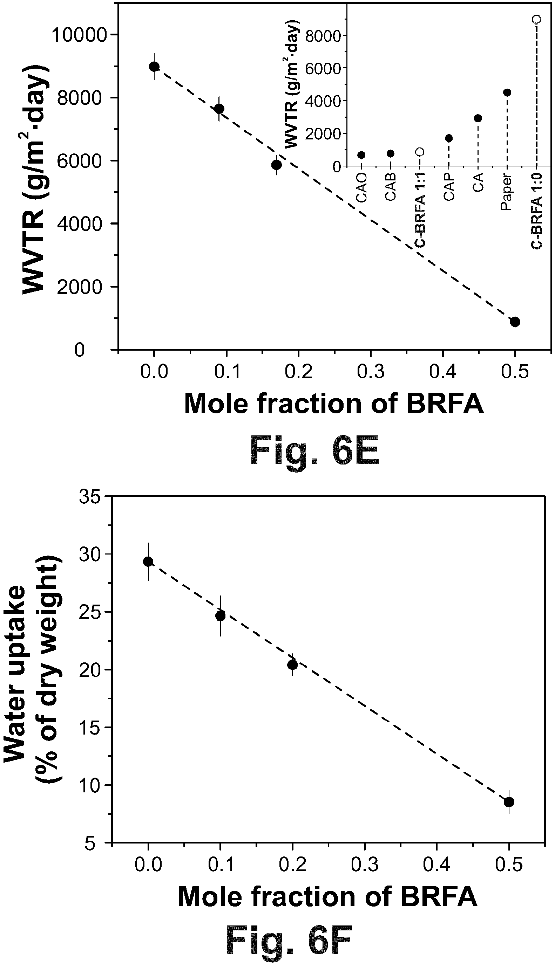

**Fig 6. A)** Relationship of the water contact angle with the mole fraction of BRFA. Asterisk denotes the water adsorbing character of C-BRFA 1:0. The insets display molecular schemes for C-BRFA 1:0 474 and C-BRFA 5:1; **B)** Water contact angles of C-BRFA 10:1, C-BRFA 5:1, and C-BRFA 1:1 (squares) in comparison with other conventional fluorinated polymers and cellulose derivatives (circles).; **C)** Surface energies of C-BRFA 10:1, C-BRFA 5:1, and C-BRFA 1:1, including the polar and dispersive contributions; **D)** Surface energies of C-BRFA 10:1, C-BRFA 5:1, and C-BRFA 1:1 (red) in comparison with other conventional fluorinated polymers and cellulose derivatives (black);**E) and F)** WVTR and water uptake, respectively, as a function of the mole fraction of BRFA. The inset in E shows WVTR values of C-BRFA 1:0 and C-BRFA 1:1 (squares) in comparison to other cellulose materials (circles).

## Examples

## Example 1. Preparation of cellulose-BRFA films

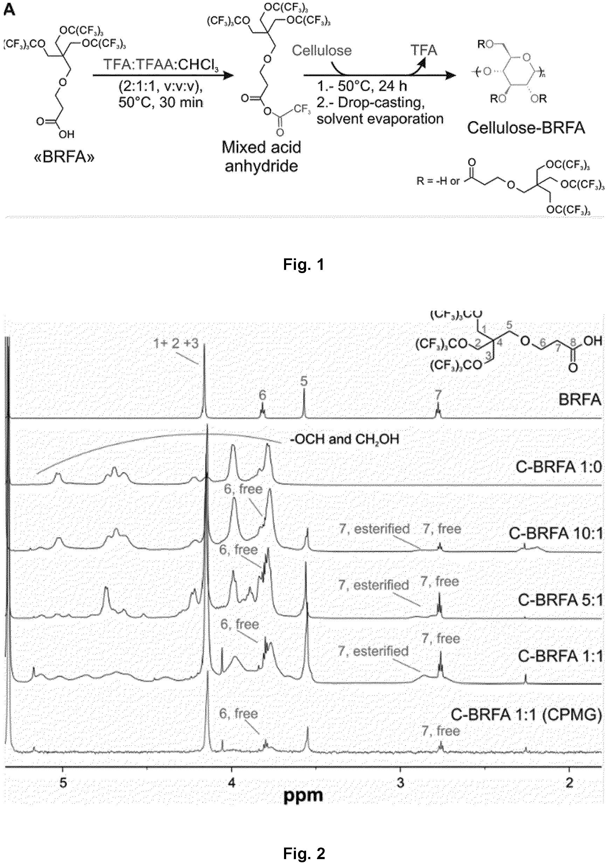

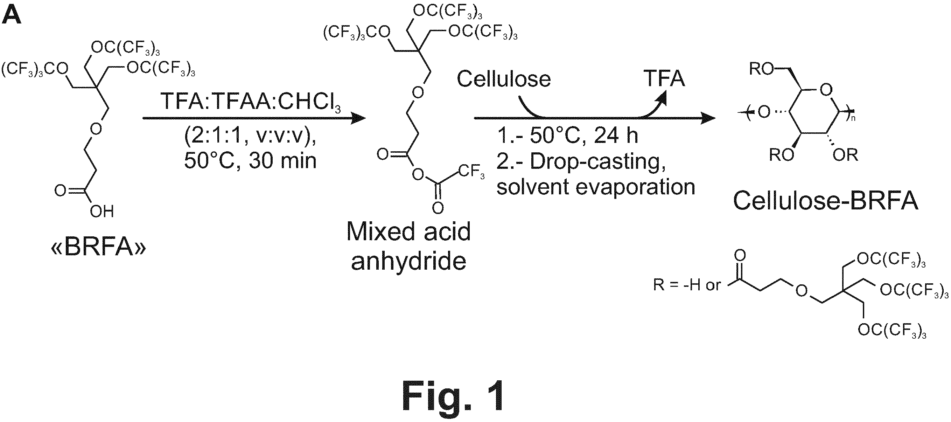

The synthesis of cellulose-BRFA esters was carried out following a methodology used for saturated fatty acids (Morooka, Norimoto, Yamada, & Shiraishi, 1984), as summarized in Figure 1A. Microcrystalline cellulose (C, 375 mg) and different amounts of BRFA (0, 125, 360, and 1970 mg) corresponding to C:BRFA ratios of 1:0, 10:1, 5:1, and 1:1 were dissolved in 25 mL of a mixture of TFA:TFAA:CHCl$_3$ (2:1:1, v:v:v) in a 50 mL closed flask and stirred at 50°C for 24 h, followed by cooling at room temperature for few hours. After that, the polymer was precipitated with cold ethanol (~4°C), washed several times with ethanol and dried at room temperature for 24 h under vacuum. The obtained polymers were re-dissolved in a mixture of TFA:TFAA:CHCl$_3$ (2:1:1, v:v:v). The corresponding solutions were then cast into glass Petri dishes and kept in a chemical hood for 2 days allowing solvent to evaporate. At the end of this process, free-standing films were obtained labeled as C-BRFA 1:0, C-BRFA 10:1, C-BRFA 5:1, and C-BRFA 1:1, respectively. This step was followed by washing the films with water and methanol (50 mL per gram of film) for three times and drying at room temperature for 24 h under vacuum.

The different samples and their labels are summarized in Table 1.

**Table 1.** Labels of the samples and initial moles, mole fractions, and weights % of cellulose and 170 BRFA.

| Label | Anhydroglucose unit (mole) | BRFA (mole) | Cellulose (mole fraction) | BRFA (mole fraction) | Cellulose (wt. %) | BRFA (wt.%) |
|---|---|---|---|---|---|---|
| C-BRFA 1:1 | 1 | 1 | 0.50 | 0.50 | 16 | 84 |
| C-BRFA 5:1 | 5 | 1 | 0.83 | 0.17 | 51 | 49 |
| C-BRFA 10:1 | 10 | 1 | 0.91 | 0.09 | 66 | 34 |

**Example 2: Characterization of cellulose esters**

**a) Chemical characterization**

For the Nuclear Magnetic Resonance (NMR) characterization, typically 15 mg of compound were dissolved in 0.5 mL of a mixture TFA-d / CD2Cl2 (1:1). The NMR spectra were recorded at 298K on a Bruker Avance III 600 MHz spectrometer equipped with 5 mm QCI cryoprobe. In the 1H NMR spectra, after applying a 90° pulse, 164 transients were accumulated over a spectral width of 20.55 ppm (offset centered at 9.00 ppm), with an acquisition time of 2.66 s and an inter-pulses delay of 30 s. An apodization exponential function equivalent to 0.1 Hz was applied to FIDs before Fourier transformation. For integral measurements, spectra were processed by using MestReNova software (MestReNova 11.0.3) that uses the peak deconvolution for integration. The degree of substitution was inferred from the 1H spectrum by the ratio between the integrated peak intensity of all 1H signals of cellulose (from 3.60 to 5.15 ppm, 7H) and the broad signal labeled as 3 (from 2.60 to 3.00 ppm, 2H) of the BRFA moiety each normalized to the number of protons generating the signal. MestReNova software was used to remove the contribution of unreacted BRFA from the integral calculation. Briefly, the integration was performed by means of integrated peak intensity deconvolution that separates the signal into components, fitting to the shape of each peak and allowing to delete the undesired component (peak) contributions (such as those of the unreacted free BRFA) from the total integral value. On the other hand, the amount of unreacted BRFA was determined from the difference in integral value before and after the undesired peak (*i.e.,* free BRFA) contribution removal.

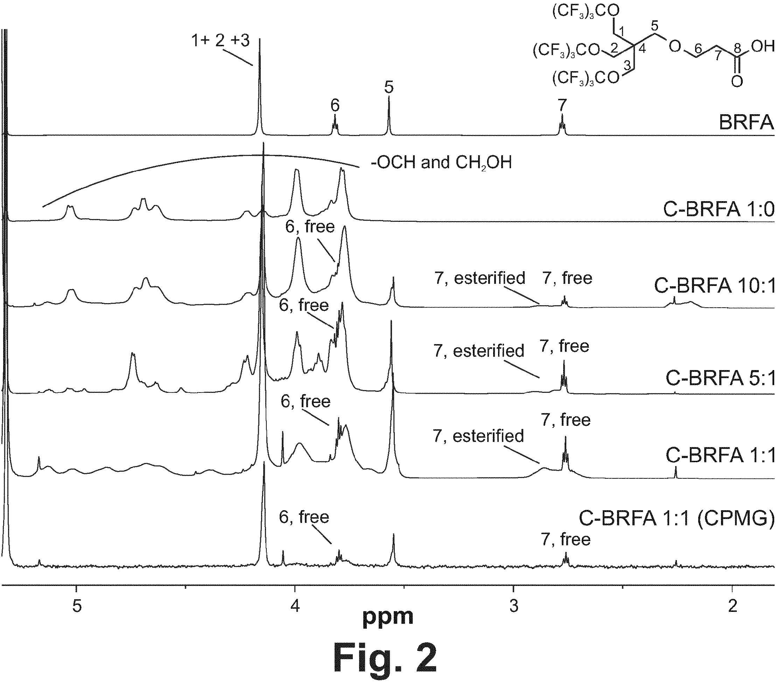

Cellulose functionalization was determined by high-resolution NMR spectroscopy by comparing 1H NMR spectra of pure cellulose (C-BRFA 1:0) and BRFA molecule to those of the fluorinated cellulose products obtained upon reaction at different molar ratios (Figure 2). In the $^1$H spectrum of pure BRFA, the $CH_2$ resonances labelled with 2 and 3 showed signals at 3.77 and 2.73 ppm, respectively, with a characteristic fine structure (*triplets*) due to the $J_{CH}$ coupling ($J_{CH}$ = 5.95 Hz) with the two adjacent protons. The sharp singlet at 4.12 ppm, can instead be attributed to the three methylenes attached to the perfluoro-*t*-butoxy group labelled 1.

For C-BRFA 10:1, C-BRFA 5:1, and C-BRFA 1:1, broad unresolved multiple signals between 2.60 and 3.00 ppm appeared, proving the occurrence of esterification between cellulose and BRFA. Such peaks were slightly shifted to lower fields (high frequencies) compared to that of free BRFA and broadened as a consequence of the reduced T2 time (the spin-spin relaxation time) due to the bond with the polymeric structure of cellulose. The presence of a triplet at 2.73 ppm can be associated with low amounts of unreacted residual BRFA calculated to be in all cases ≤ 10 molar% respect to esterified BRFA. It is expected that such low amount of residual BRFA has a little effect in the physical properties of the cellulose esters. The presence of multiple broad signals (instead of only one signal) was attributed to the formation of esters at different positions within the anhydroglucose unit (AHG).

The degree of substitution (DS) of BRFA-containing C-BRFA samples is reported in Table 2. As observed, experimental DS values were close to the 50% of the theoretical ones (calculated as the ratio between the added moles of BRFA and AHG). In any case, higher DS values were observed as the initial molar ratio of BRFA was increased.

**Table 2.** Degrees of substitution of C-BRFA 10:1, C-BRFA 5:1, and C-BRFA 1:1. 315

| Sample | Degree of substitution (theoretical) | Degree of substitution (experimental) |
|---|---|---|
| C-BRFA 10:1 | 0.1 | 0.06 |
| C-BRFA 5:1 | 0.2 | 0.09 |
| C-BRFA 1:1 | 0.5 | 0.23 |

Size Exclusion Chromatography (SEC) has been used to measure the molecular weight and molecular weight distribution of the samples. A SEC system from Agilent was used including a degasser, pump, autosampler, column oven, and a refractive index detector. *N,N*-dimethylacetamide containing 0.21 % LiCl was used as an eluent at 30 °C. The columns GRAM guard/30/100 Å were purchased from Polymer Standards Service GmbH (PSS, Mainz, Germany). Calibration of the elution curves is based on poly(ethylene glycol) standards.

C-BRFA 1:1 dissolved well in *N,N*-dimethylacetamide/LiCl used as eluent for the SEC measurements. However, no polymer had been eluted from the column despite good filterability. In contrast, samples C-BRFA 10:1 and C-BRFA 5:1 could be dissolved only when using LiCl amounts up to 0.21%. Results of SEC measurements can be found in Table 3. A microcrystalline cellulose with number average molar mass (Mn) of 16,000 g/mol, hence number average degree of polymerization (DPn) of 99 had been used as starting material. The DPn values calculated from the SEC results are comparable with those of the starting material. It can be concluded that polymer degradation during esterification reaction is negligible, but formation of aggregates must be taken into account as well.

**Table 3**. Molar mass and polydispersity (Đ) of C-BRFA 10:1, C-BRFA 5:1, and C-BRFA 1:1 326 measured by SEC.

| Sample | Number average molar mass (g/mol) | Weight average molar mass (g/mol) | Đ | DP$_n$[a] | DP$_w$[a] |
|---|---|---|---|---|---|
| C-BRFA 10:1 | 19,675 | 38,273 | 1.9453 | 92 | 180 |
| C-BRFA 5:1 | 32,753 | 75,798 | 2.3142 | 137 | 318 |
| C-BRFA 1:1 | -b | - b | - b | - b | - b |
| a Number (DPn) and weight average degree of polymerization (DPw).<br>b No polymer eluted. | | | | | |

The SEC curves indicate an almost monomodal molar mass distribution. The influence of the degree of substitution has been considered and the curves shown here are normalized to the non-functionalized cellulose backbone. Sample C-BRFA 5:1 has a shoulder towards the lower molar mass fraction at around 10,000 g/mol, which could be caused by the higher reagent amounts and, hence, slightly pronounced side reactions. However, the molar mass is higher compared with the less functionalized sample C-BRFA 10:1, which could be caused by aggregation effects.

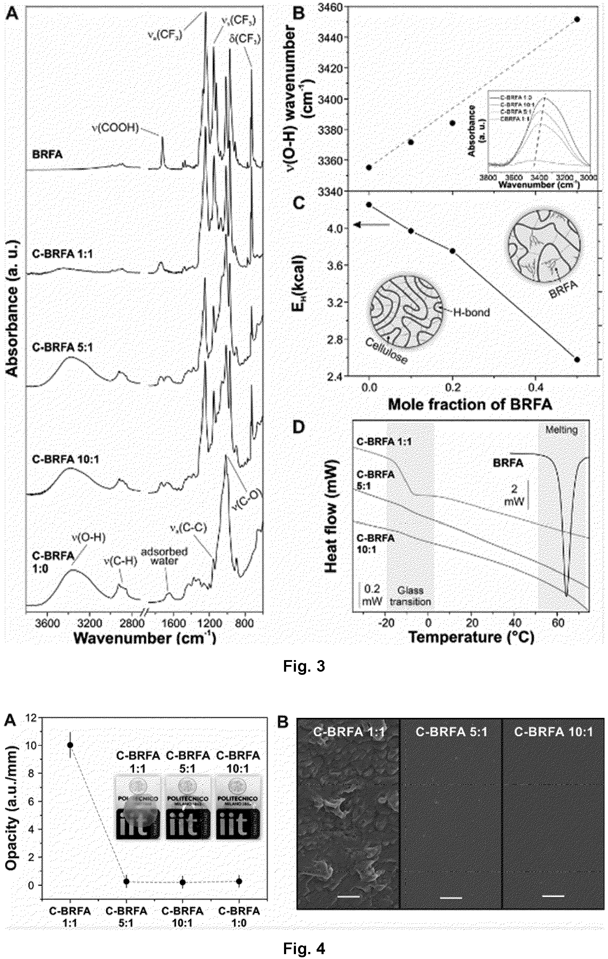

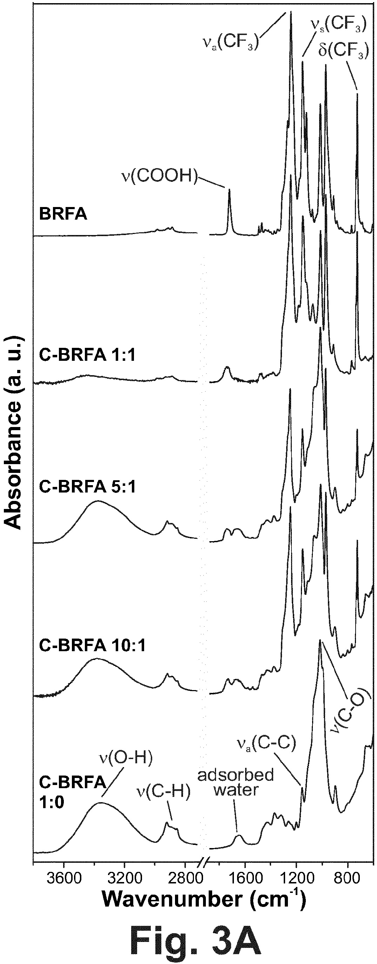

Further chemical characterization was carried out by ATR-FTIR spectroscopy (Figures 3A-C). Infrared spectra were obtained with a single-reflection attenuated total reflection (ATR) accessory (MIRacle ATR, PIKE Technologies) with a diamond crystal coupled to a Fourier Transform Infrared (FTIR) spectrometer (Equinox 70 FT-IR, Bruker). All spectra were recorded in the range from 3800 to 600 cm-1 with a resolution of 4 cm-1 accumulating 128 scans.

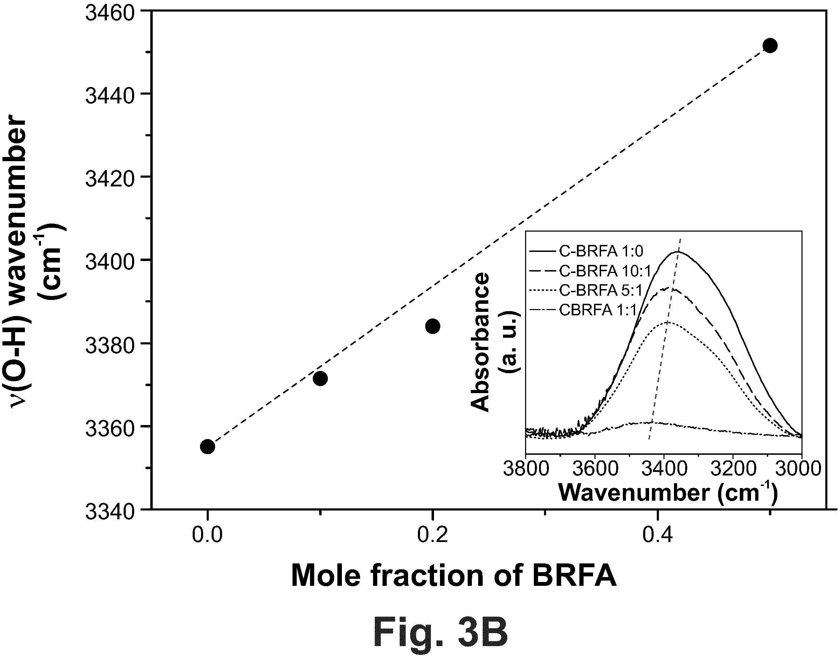

Figure 3A shows the ATR-FTIR of the different C-BRFA samples and pure BRFA acid. C-BRFA 1:0 displayed the infrared spectrum of cellulose whose main absorptions were: OH stretching mode (3356 cm$^{-1}$), CH stretching mode (2893 cm$^{-1}$), adsorbed water (1645 cm$^{-1}$), asymmetric C-C stretching mode (1155 cm$^{-1}$), and C-O stretching mode (1018 cm$^{-1}$). Main bands of BRFA were assigned to carboxyl (C=O stretching mode of free COOH groups at 1720 cm$^{-1}$) and CF3 (asymmetric and symmetric CF3 stretching modes at 1243 and 1152 cm$^{-1}$, respectively, and a CF3 bending mode at 726 cm$^{-1}$) groups. C-BRFA 10:1, C-BRFA 5:1 and C-BRFA 1:1 showed bands of both components, proportionally to the corresponding percentages of the initial components. However, the band of BRFA assigned to C=O stretching of free COOH groups at 1720 cm$^{-1}$ shifted to 1738 cm$^{-1}$ that is ascribed to C=O stretching vibration of ester groups, confirming NMR results. Moreover, a shift in the position of the cellulose OH stretching was observed (Figure 3B). In fact, the wavenumber of this vibration was linearly increased from ≈3355 cm$^{-1}$ for C-BRFA 1:0 to ≈3452 cm$^{-1}$ for C-BRFA 1:1 (*i.e.,* a blue shift of 97 cm$^{-1}$).

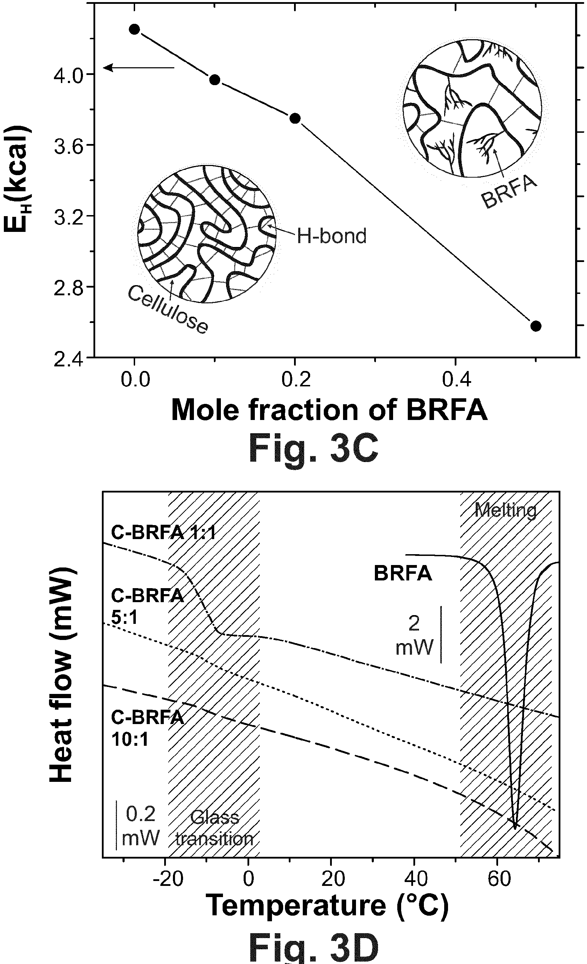

As plotted in Figure 3C, E$_H$ decreased, with respect to the mole fraction of BRFA, from ~4.3 kcal for C-BRFA 1:0 to -2.6 kcal for C-BRFA 1:1 (*i.e.,* a decrease of -40%). Based on ATR-FTIR and NMR results, a simple molecular model is proposed, insets of Figure 3C. For pure cellulose with no BRFA contribution, polymer chains interact strongly by numerous H-bonds (left inset of Figure 3C). For BRFA-rich samples (right inset of Figure 3C), the probability of finding two hydroxyl groups to form an H-bond is lower due to the consumption of OH groups during esterification. In addition, the steric hindrance produced by voluminous BRFA can effectively separate cellulose chains, inducing longer and weaker H-bonds.

**b) Thermal characterization**

Differential Scanning Calorimetry (DSC) thermograms were acquired with a DSC Q20 (TA Instruments) from RT to 100 °C under nitrogen flow (50 mL/min) at 20 °C/min using non-hermetic aluminum pans. About 4 mg (weighted with 0.00001 g precision) of sample were used. Specimens were first heated to 100 °C to release moisture, cooled to -75 °C and finally ramped to 100 °C. The glass transition temperature (Tg) was calculated using the inflection method.
Figure 3D shows the thermograms of BRFA, C-BRFA 1:1, C-BRFA 5:1, and C-BRFA 10:1. Pure BRFA displayed a single thermal event: a melting point at ~64 °C with an associated enthalpy of fusion of -30.3 J/g. This value is lower than those of acetic (192 J/g), formic (276 J/g), and, in general, fatty acids (160-200 J/g). Most likely, despite the high molecular weight of the fluorinated molecule (850.26 g/mol), the lower enthalpy of fusion can be a consequence of the lower number of intermolecular interactions (e.g., H-bonds and van der Waals forces) caused by the steric hindrance and the little propensity of CF3 groups to be involved in dispersion and dipole forces. On the other hand, cellulose-BRFA samples showed a glass transition close to -11 °C whose intensity increased with the number of BRFA groups in the polymer. This low value can be very useful for the processability of the material. In fact, the high Tg of other cellulose derivatives such as cellulose acetate (205 °C), ethyl cellulose (143 °C), and sodium carboxymethylcellulose (55 °C) is typically decreased by addition of plasticizers before processing.

**c) Mechanical characterization**

Mechanical properties of samples were studied by uniaxial tensile tests on a dual column Instron 3365 universal testing machine equipped with a 500 N load cell. Dogbone shaped samples (25 mm length, 4 mm width) were stretched at a rate of 2 mm/min. All the stress-strain curves were recorded at 25°C and 44% RH. The tensile measurements were conducted according to ASTM D 882 Standard Test Methods for Tensile Properties of Thin Plastic Sheeting. Seven measurements were carried out for each sample and the results were averaged to obtain a mean value. The values of Young's modulus, stress and elongation at break were calculated from the stress-strain curves.

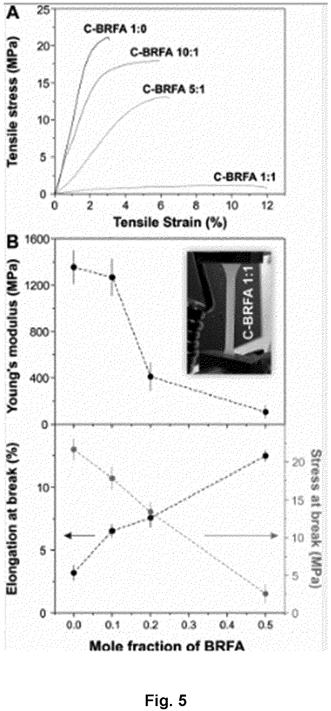

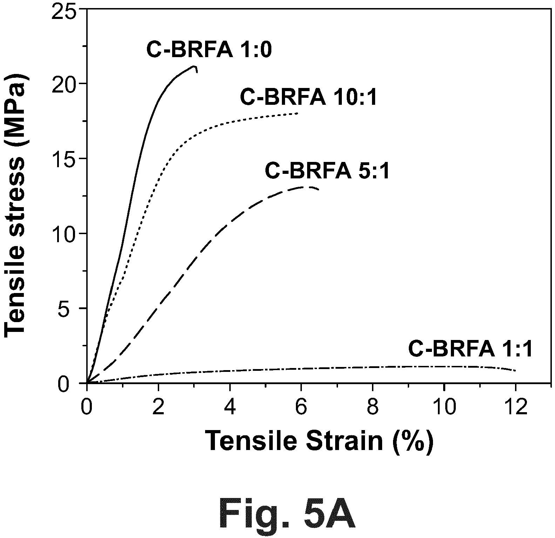

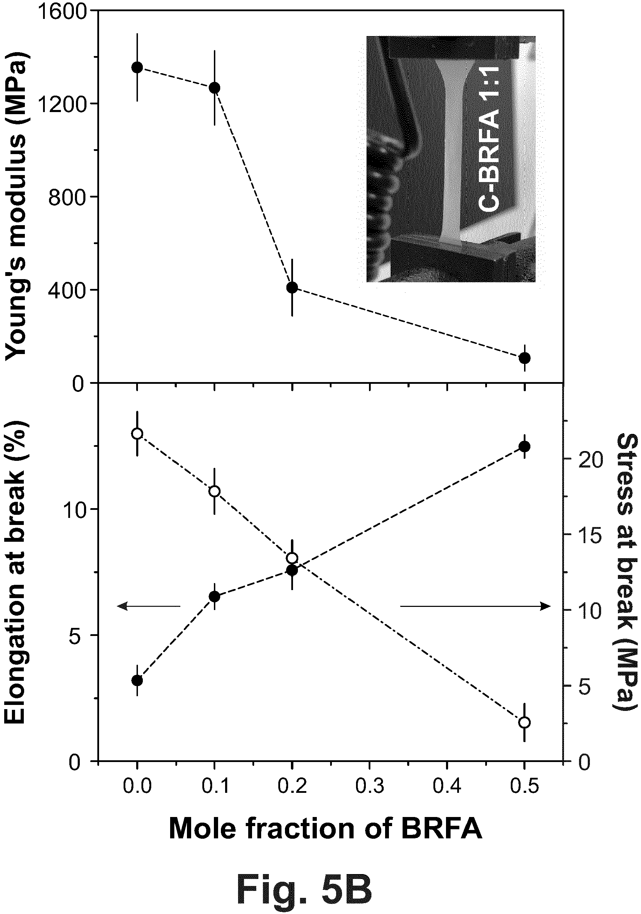

Figure 5A shows the typical stress-strain curves for C-BRFA 1:0, C-BRFA 10:1, C-BRFA 5:1, and C-BRFA 1:1. Compared to pure cellulose produced with the same process, C-BRFA films are less rigid and more ductile, with lower Young's modulus and stress at break and higher elongation at break, as a function of the mole fraction of BRFA (Figure 5B). In detail, C-BRFA 10:1 presented characteristics similar to those of other cellulose derivatives such as ethyl cellulose or cellulose acetate, whereas C-BRFA 5:1 was similar in rigidity, and of the same order of magnitude in strength, to PTFE. On the other hand, C-BRFA 1:1 showed very low Young's modulus and strength, therefore its application as a self-standing material is not recommended, although it could be better exploited in application as a coating over substrate materials, even flexible ones: the elongation, above 12%, guarantees good conformability for relatively small bending radii.
The above-mentioned change from rigid to ductile (or even soft in the case of C-BRFA 1:1) can be related to the modifications of the H-bonding network characterized by ATR-FTIR spectroscopy. Thus, cellulose is very rigid due to the numerous and strong H-bonds. However, as BRFA groups reduce the effective number of hydroxyl groups and separate cellulose chains, weakening H-bonds, the polymer becomes ductile. C-BRFA 1:1 represents a limit of this situation, being, hence, its mechanical properties very poor.

**d) Morphological and optical characterization**

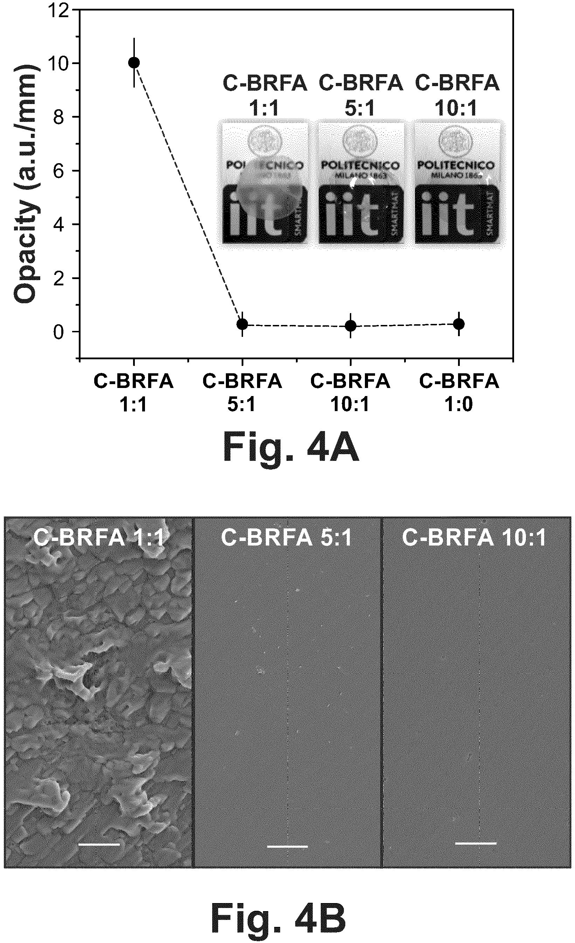

Scanning electron microscope (SEM) images were acquired using a JEOL JSM-6490OLA, operating at 10 kV acceleration voltage. The samples were coated with a 10 nm thick film of gold. To analyse the top-view and cross-section morphologies of the samples, imaging operation was carried out with secondary electrons.
Opacity was determined by measuring the film absorbance at 600 nm using a UV spectrophotometer Varian Cary 6000i. Films were cut into a rectangle pieces and directly placed in the spectrophotometer test cell. An empty test cell was used as the reference. The opacity of the films was calculated by the following equation as previously reported

$$Opacity = \frac{A600}{x}$$

where $A600$ is the value of absorbance at 600 nm and $x$ is the film thickness (mm). Insets of Figure 4A show photographs of cellulose-BRFA samples. C-BRFA 1:1 was a translucent, whitish film, while C-BRFA 5:1 and C-BRFA 10:1 were fully transparent and colorless, similar to amorphous cellulose films obtained from TFA solutions. The changes in the transparency were evaluated by determination of the opacity (Figure 4A). On one hand, the opacity value of C-BRFA 1:1 was -10.0 a.u./mm typical of semitransparent materials such as thin paper substrates and ethyl cellulose-PDMS composites. On the other hand, for C-BRFA 1:0 (cellulose with no BRFA contribution), C-BRFA 5:1, and C-BRFA 10:1, values of opacity were -0.2 a.u./mm, indicating a high transparency.

The micromorphology of C-BRFA 1:1, C-BRFA 5:1, and C-BRFA 10:1 was characterized by SEM (Figure 4B). As observed, the surface of C-BRFA 1:1 was rough with -5 $\mu$m width flake-like particles, whereas flat and homogeneous surface were detected for C-BRFA 5:1 and C-BRFA 10:1. These morphologies may be associated with the opacity and related to the tendency of BRFA to crystallize. Thus, the rough surface of C-BRFA 1:1 can induce a high scattering of visible light, hence, decreasing the transparency, an effect that was not observed for smooth C-BRFA 5:1 and C-BRFA 400 10:1 samples.

### e) Wettability and hydrodynamic characterization

To characterize the surface wettability of the samples, static water contact angles (W-CA) were measured with the sessile drop method at room temperature at five different locations on each surface using a contact angle goniometer (DataPhysiC-BRFA OCAH 200). 5 $\mu$L droplets of milli-Q water were deposited on the surfaces and side view images of the drops were captured. W-CAs were automatically calculated by fitting the captured drop shape and after 2 minutes from the drop deposition on the surface in order to consider values at equilibrium.

Water uptake measurements of C-BRFA samples were also carried out. Dry samples were weighed on a sensitive electronic balance (0.0001 g accuracy) and placed in different humidity chambers. The different humidity conditions were changed before each weighing and were set, respectively, at: 0 and 100%. After remaining in humidity chambers for one day each sample was weighed and the amount of adsorbed water was calculated based on the initial dry weight as the difference.

Water vapor permeability (WVP) of the samples was determined at 25 °C and under 100% relative humidity gradient ($\Delta$RH%) according to the ASTM E96 standard method. In this test, a permeation chamber with inside diameter of 7 mm and 10 mm inner depth was used that was filled with 400 $\mu$L of deionized water (which generates 100% RH inside permeation cell). The samples were cut into circles and mounted on the top of the permeation chambers. The permeation chambers were placed in 0% RH desiccator with anhydrous silica gel, which was used as a desiccant agent to maintain 0% RH in desiccator. The water transferred through the film was determined from the weight change of the permeation chamber every hour during a period of 8 h using an electronic balance (0.0001 g accuracy) to record mass loss over time. The mass loss of the permeation chambers was plotted as a function of time. The slope of each line was calculated by linear regression. Then, the water vapor transmission rate (WVTR) was determined.

The analysis of the wettability is displayed in Figures 6A-D. Figure 6A shows the relationship between the water contact angle (W-CA) and the mole fraction of BRFA. The WCA of C-BRFA 1:0 was ~55°, typical of hydrophilic materials and similar to the value reported for amorphous cellulose films obtained by drop-casting of TFA solutions. For C-BRFA 10:1, C-BRFA 5:1, and C-BRFA 1:1, values increased up to -87, -104, and 127°, respectively, becoming more hydrophobic as the percentage of BRFA groups was higher due to the presence of water repellent CF3 groups and the lower amount of hydrophilic OH groups, insets of Figure 6A. The differences between C-BRFA 5:1 and C-BRFA 1:1 can also be ascribed to the rough surface of the latter, as observed in Figure 4B. Figure 6B compares water contact angle data of C-BRFA 10:1, C-BRFA 5:1, and C-BRFA 1:1 with cellulose, ethyl cellulose (EC), cellulose acetate (CA), polyvinylidene fluoride (PVDF), polytetrafluoroethylene (PTFE), and superhydrophobic paper from nanostructured fluorinated cellulose esters. In general, values of C-BRFA samples were much higher than those of cellulose materials and comparable to common fluoropolymers. In particular, C-BRFA 1:1 showed the highest water contact angle. Surface energies and their dispersive and polar contributions of C-BRFA 10:1, C-BRFA 5:1, and C-BRFA 1:1 are shown in Figure 6C. In general, the values are low and decreased with the amount of BRFA groups, being the dispersive contribution higher than the polar one. Indeed, self-assembled monolayers of a thiol analogous to BRFA acid on gold substrates have been characterized by low surface free energy with similar hydrophobic performances than standard linear perfluoroalkyl molecules. Interestingly, the polar contribution of C-BRFA 1:1 is practically zero, indicating that the high CF3 density in BRFA groups prevent the participation of remaining surface hydroxyl groups of cellulose chains in the wettability phenomena. Surface energies of C-BRFA samples were compared to those of cellulose, CA, EC, PVDF, and PTFE (Figure 6D). As observed, surface energies of C-BRFA samples are much lower than cellulose and cellulose acetate and closer to PTFE.

Finally, the breathability (characterized by the Water Vapor Transmission Rate or WVTR) and the water uptake of the C-BRFA samples were determined (Figures 6E-F). Both parameters were linearly decreased with the mole fraction of BRFA. The WVTR ranged from -8981 g m$^{-2}$ d$^{-1}$ for C-BRFA 1:0 to -860 g m$^{-2}$ d$^{-1}$ for C-BRFA 1:1 (*i.e.,* a reduction of -90%). These values were typical of moderately breathable materials used in textiles such as those made from conventional waterproof-breathable fabrics (e.g., nylon, PTFE, polyurethane, etc.).

In addition, when compared to other cellulose esters and materials such as cellulose acetate oleate (CAO), cellulose acetate butyrate (CAB), cellulose acetate propionate (CAP), cellulose acetate (CA), and paper, C-BRFA 1:1 showed a WVTR value similar to relatively low breathable CAO and CAP. On the other hand, water uptakes at 100% RH decreased from -29% for C-BRFA 1:0 to -9% for C-BRFA 1:1, indicating that BRFA groups increase the water proofing characteristics of cellulose.

**Claims**

1. A method for preparing cellulose-branched fluorinated acid esters (C-BRFA) by reaction of cellulose with a multi-branched fluorinated carboxylic acid in presence of a mixed anhydride system trifluoroacetic acid/trifluoroacetic acid anhydride.

2. The method according to claim 1, wherein the method comprises the following steps:

   a) solving BRFA crystals with microcrystalline cellulose (C) in proportions C:BRFA ranging from molar ratio 10:0 to 1:1 in a mixture of $TFA:TFAA:CHCl_3$ in a molar ratio of X:1:Y wherein X ranges from 1 to 2, and Y ranges from 0 to 2;
   b) cooling at temperature from 20 to 30 °C;
   c) precipitation of the polymer with cold ethanol and washing with ethanol for one to four times;
   d) drying at room temperature for 24 h under vacuum and re-dissolving the polymer in a mixture of $TFA:TFAA:CHCl_3$ in a molar ratio of X:1:Y wherein X ranges from 1 to 2, and Y ranges from 0 to 2;
   e) solvent evaporation for 12h to 3 days;
   f) washing the obtained C-BRFA films from step (h) with water, methanol, or a mixture water:methanol for one to four times;
   g) drying at room temperature for 24 h under vacuum.

3. The method according to claim 2, wherein the C-BRFA proportion in step (a) and/or (d) is selected from 1:0, 10:1, 5:1 and 1:1.

4. The method according to any preceding claim, wherein the precipitate in step (c) is washed with ethanol three times.

5. The method according to any preceding claim, wherein the solvent evaporation in step e) takes 2 days.

6. The method according to any preceding claim, wherein the washing solution in step f) is water:methanol.

7. A Cellulose-branched fluorinated acid esters obtained by a method as defined in claims 1 to 6.

8. Use of the cellulose-branched fluorinated acid esters as defined in claim 7 for the preparation of waterproof-breathable films.

9. Use of the cellulose-branched fluorinated acid esters as defined in claim 7 for the preparation of coatings in textiles.

10. Use of the cellulose-branched fluorinated acid esters as defined in claim 7 for food packaging.

**Fig. 1**

**Fig. 2**

Fig. 3

Fig. 4

**Fig. 5**

**Fig. 1**

Fig. 2

Fig. 3A

Fig. 3B

EP 4 116 333 A1

Fig. 3C

Fig. 3D

**Fig. 4A**

**Fig. 4B**

Fig. 5A

Fig. 5B

Fig. 6A

Fig. 6B

Fig. 6C

Fig. 6D

Fig. 6E

Fig. 6F

Europäisches
Patentamt

European
Patent Office

Office européen
des brevets

# EUROPEAN SEARCH REPORT

Application Number

EP 21 38 2618

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TEDESCHI GIACOMO ET AL: "Waterproof-breathable films from multi-branched fluorinated cellulose esters", CARBOHYDRATE POLYMERS, APPLIED SCIENCE PUBLISHERS , LTD BARKING, GB, vol. 271, 7 July 2021 (2021-07-07), XP086720554, ISSN: 0144-8617, DOI: 10.1016/J.CARBPOL.2021.118031 [retrieved on 2021-07-07] | 1-9 | INV. C08B3/10 C08L1/10 C08B3/14 |
| A | * abstract; fig.1; paragraphs 2.4 and 4 * | 10 | |

TECHNICAL FIELDS
SEARCHED      (IPC)

C08B
C08L

The present search report has been drawn up for all claims

| Place of search | Date of completion of the search | Examiner |
|---|---|---|
| Munich | 13 December 2021 | Pellegrini, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
............................................................................................
& : member of the same patent family, corresponding document

EPO FORM 1503 03.82 (P04C01)